Europäisches Patentamt

**European Patent Office**

Office européen des brevets

(19)

(11) Publication number: **0 094 715**

A2

(12)

# EUROPEAN PATENT APPLICATION

(21) Application number: 83200659.7

(22) Date of filing: 06.05.83

(51) Int. Cl.³: **B 60 K 17/10**
**B 60 K 41/16**

(30) Priority: 13.05.82 NL 8201973

(43) Date of publication of application:
23.11.83 Bulletin 83/47

(84) Designated Contracting States:
AT BE CH DE FR GB IT LI LU NL SE

(71) Applicant: De Rotterdamsche Droogdok Maatschappij
B.V.
Heyplaatstraat 4
NL-3089 RC Rotterdam(NL)

(72) Inventor: de Swart, Jozef Johannes
West Kruiskade 53D
NL-3014 AL Rotterdam(NL)

(74) Representative: Noz, Franciscus Xaverius, Ir. et al,
Boschdijk 155 P.O. Box 645
NL-5600 AP Eindhoven(NL)

(54) Industrial vehicle.

(57) An industrial vehicle, particularly an excavator or the like, comprising a ground-wheel supported frame, at least one hydraulic pump driven by a combustion engine equipped with a control-mechanism for fuel supply and a hydraulic motor to be driven with the aid of the hydraulic pump, said motor being coupled through a transmission mechanism with drivable ground wheels, said transmission mechanism being settable in a first position for a low speed run and in a second position for a high speed run of the vehicle, whilst between the hydraulic pump and the hydraulic motor a three-position valve is arranged for interrupting the fluid supply to the hydraulic motor and for inverting the direction of rotation of the hydraulic motor, the pump and the motor being of the self-setting type so that they set themselves in dependence on the power fed to the hydraulic pump and on the power absorbed at the hydraulic motor, whereby means are provided with the aid of which at setting to high speed travel the three-position valve arranged between the hydraulic pump and the hydraulic motor is set in the fully open position for a forward drive whilst with the aid of a control-member the supply of pressurized fluid to a setting member regulating the control-mechanism of the fuel supply to the combustion engine can be controlled.

./...

FIG. IA

-1-

Industrial vehicle.

The invention relates to an industrial vehicle, particularly an excavator or the like comprising a ground-wheel-supported frame, at least one hydraulic pump driven by a combustion engine provided with a control-mechanism for fuel supply and a hydraulic motor to be driven with the aid of the hydraulic pump, said motor being coupled through a transmission mechanism with drivable ground wheels, the transmission mechanism being settable in a first position for low speed and in a second position for high speed of the vehicle, whilst between the hydraulic pump and the hydraulic motor a three-position valve is arranged for interrupting the oil supply to the hydraulic motor and for inverting the direction of rotation of the hydraulic motor, the pump and the motor being of the self-regulating type so that they set themselves in dependence on the power fed to the hydraulic pump and the power absorbed at the hydraulic motor.

Such industrial vehicles in the form of, for example, excavators or draglines or the like when used on a building site or the like are usually displaced only slowly, if at all they have to be displaced.

For a transport at longer distances the travelling speed is higher. Hitherto it has been common practice in this case to set the combustion engine to a given number of revolutions and to control the speed of the vehicle by regulating the supply of pressurized fluid from the hydraulic pump to the hydraulic motor. Continuous run of the engine with a comparatively high number of revolutions during road transport is annoying and unnecessary, whilst speed control by regulating the fluid supply from the hydraulic pump to the hydraulic motor at such relatively high speeds can be carried out only with difficulty.

The invention has for its object to provide an industrial vehicle of the kind set forth in which the above-described inconveniences can be avoided.

According to the invention this can be achieved in that means are provided with the aid of which in going over to a high speed the three-position valve arranged between the hydraulic pump and the hydraulic motor is switched to the fully open position for a forward run, whilst with the aid of a control-member the supply of pressurized fluid to a setting member governing the control-mechanism of the fuel supply to the combustion engine can be controlled.

By using the construction embodying the invention the speed of the industrial vehicle during a travel with relatively high speed can be controlled in a simple manner with the aid of the number of revolutions of the engine.

A second aspect of the invention relates to an industrial vehicle, particularly an excavator or the like comprising at least one hydraulic pump, at least one member to be driven with the aid of fluid supplied by the pump and a seat for the driver of the vehicle.

According to the invention said seat is provided with an arm rest which is pivotable between a working position and a position in which the arm rest does not hinder sitting down on and getting off the seat, whilst in the range of pivotal movement of the arm rest or in a part connected with the arm rest a control-member is provided with the aid of which the supply of fluid from the engine to the member to be driven at a pressure such that the member to be driven can be actuated can be cut off upon a turn of the arm rest out of the working position.

By using this construction it can be ensured that the operator of the vehicle, even when the seat is arranged in a limited space, can easily leave the seat by turning away the arm rest or sit down on the seat respectively, whilst it is automatically avoided that the member to be driven with the aid of the pressurized fluid becomes operating when the arm rest is not in the working position.

The invention will be described more fully hereinafter with reference to the accompanying Figures.

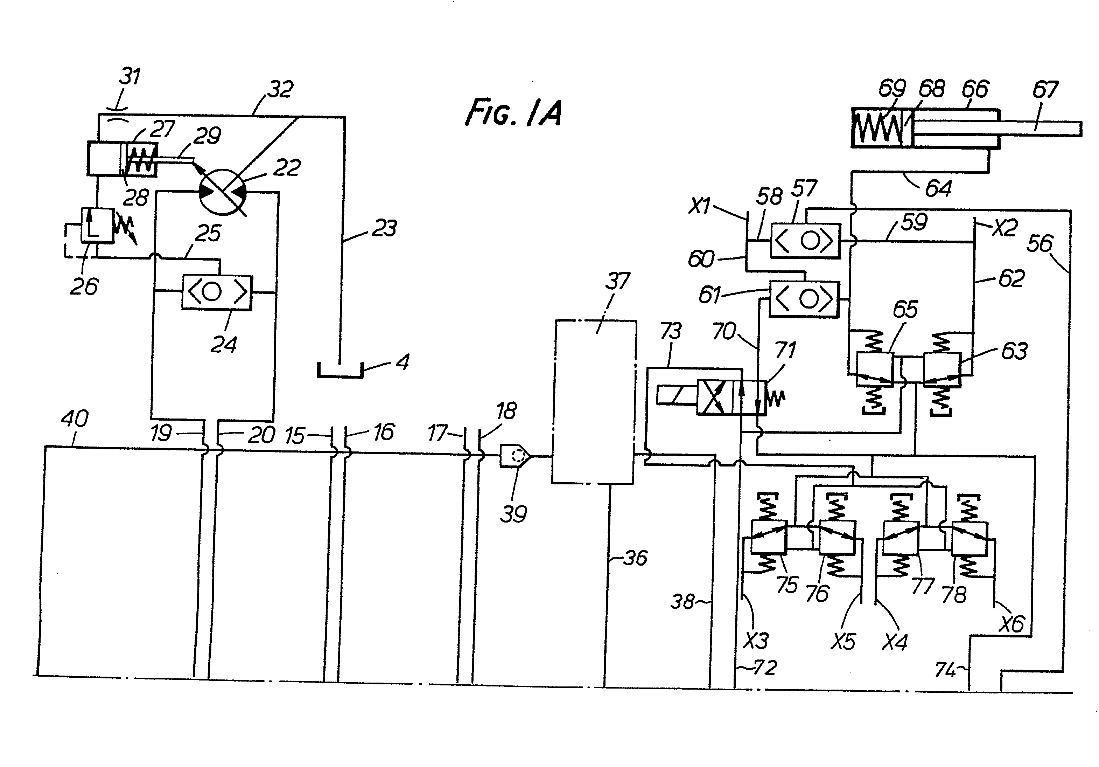

Fig. 1 schematically shows an embodiment of the hydraulic system of an industrial vehicle in accordance with the invention.

Fig. 2 is a schematic side elevation of a pivotable arm rest of the industrial vehicle.

In the embodiment shown the vehicle comprises two hydraulic pumps 1 and 2 to be driven with the aid of a combustion engine (not shown), which pumps are coupled with one another so that the fluid displacements of these pumps will invariably be equal to one another. The pumps 1 and 2 are communicating through a supply duct 3 with a sump 4 containing a given amount of fluid. With the supply duct 3 is furthermore communicating a hydraulic pump 5 ensuring the supply of control-fluid as will be described more fully hereinafter. With the aid of a pressure-limiting valve 6 communicating with the pump 5 the pressure of the fluid supplied by the pump is maintained at a given value, for example, 30 bars.

The pump 1 communicates through an outlet duct 7 with a first valve block 8 comprising in the embodiment shown three three-position valves 9, 10 and 11. If desired, more valves of this kind may, of course, be arranged in the valve block 8.

In the medium positions shown of the valves 9, 10 and 11 the duct 7 through which in operation pressurized fluid is fed from the pump 1 to the valve block 8 is in open communication with an outlet duct 12 connected with the valve block. In order to ensure that, when one of the valves 9, 10 or 11 is actuated, pressurized fluid can also be fed to the other valves out of the duct 7, two by-pass ducts 13 and 14 are connected with the duct 7 in the valve block 8. The by-pass duct 13 is connected through a connecting duct 15 and the by-pass duct 14 is connected through a connecting duct 16' with the valve 9. In a similar manner the valves 10 and 11 are connected with the by-pass ducts 13 and 14 as is shown in the drawing.

Through ducts 15, 16 and 17, 18 respectively the valves 10 and 11 communicate with the users, for example, tools connected with the vehicles such as digging buckets or arms supporting the digging buckets and the like,which are adjustable with the aid of hydraulic rams. The control of such users with the aid of the valves 10 and 11 is generally known and does not form part of the invention so that further description will be dispensed with.

The three-position valve 9 furthermore communicates through two ducts 19 and 20 with a hydraulic motor 22, which in turn communicates through an outlet duct 23 for leaking oil with the sump 4. Between the two ducts 19 and 20 a change-over valve 24 is arranged in a manner known per se. Through a duct 25 including a pressure-limiting valve 26 the change-over valve 24 is connected with a cylinder 27. The cylinder comprises a spring-loaded piston 28, with which is connected a piston rod 29, which is coupled with a setting mechanism for the hydraulic motor 22. With the cylinder space 27 furthermore communicates a return duct 32 including a choke member 31, which communicates with the return duct 23.

The by-pass duct 14 includes a pressure control-valve 33 which communicates through a control-duct 34 with a two-position valve 35 to be changed over by a solenoid. In the position shown of the valve 35, in which the solenoid of the valve is not energized, the control-duct 34 is in open communication with the sump 4. Thereby the valve 33 brings the duct 7 into communication with the duct 12, the pressure drop across the valve being 5 bars.

When the solenoid of the valve 35 is energized, the flow from the duct 34 to the sump 4 is cut off and the valve 33 is set so that the pressure in the duct 7 can rise to the working pressure normally amounting to about 300 bars.

The second pump 2 used in this embodiment has its outlet duct 36 communicating with a second valve block 37 (shown only schematically) corresponding with the valve block 8. Said valve block can comprise valves corresponding with the valves 9 to 11 for supplying pressurized fluid to further users in known manner. With the valve block 37 communicates an outlet duct 38 for returning the hydraulic fluid from the users.

With the valve block 37 furthermore communicates a duct 40 including a non-return valve 39 which establishes a communication between the valve block 37 and the duct 7. It is thus ensured that pressurized fluid supplied by the pump 2 to the second valve block 37 will be supplied to the first valve block together with the pressurized fluid supplied by the pump 1, when the users connected with the second valve block 37 do not need it.

The Figure furthermore shows that the duct 7 communicates through a duct 41 with a cylinder 42 in which a spring-loaded piston 43 is located. In a similar manner the duct 36 communicates through a duct 44 with a cylinder 45 having a spring-loaded piston 46. The piston rods 47 and 48 of the pistons 43 and 46 respectively are connected through a coupling mechanism 49 with the setting members for the hydraulic pumps 1 and 2. It will be obvious that by using the cylinders 42 and 45 with the pistons 43 and 46 and of the cylinder 27 with the piston 28 the pumps 1 and 2 and the motor 22 will automatically adjust themselves in accordance with the power supplied to the pumps 1 and 2 by the engine and the power absorbed by the hydraulic motor 22.

The outlet duct 12 is connected with a port of a so-called bias valve 50. The bias valve 50 is furthermore connected through a duct 52 including a choke member 51 with the outlet duct 7 of the hydraulic pump 1.

An outlet duct 53 of the bias valve 50, together with the outlet duct 38, is connected with an outlet duct 54 including a non-return valve 53' and being in open communication with the sump 4. With the bias valve is furthermore connected a fourth duct 56 including a choke member 55. The duct 56 is connected in the manner shown in the Figure with a change-over valve 57, with one end of which communicates a duct 58, whilst a duct 59 is connected with the other end. The duct 58 is connected with a duct 60, one end of which is connected with a change-over valve 61. The outlet end $x_1$ of the duct 60 is in open communication through a duct (not shown) with the port $x_1$ of the three-position duct 9.

-6-

The duct 59 is connected with a duct 62, one end of which is connected with a control-valve 63. The end $x_2$ of the duct 62 is connected through a duct (not shown) with the port $x_2$ of the valve 9.

One end of the change-over valve 61 is connected with a duct 64, one end of which communicates with a control-valve 65, whereas the other end is connected with the end of a setting cylinder 66. The setting cylinder 66 comprises a piston 68 provided with a piston rod 67. On the side of the piston 68 remote from the piston rod 67 is bearing a compression spring 69 enclosed in the cylinder 66. The piston rod 67 is connected in a manner not shown with a control-mechanism for the fuel supply to the combustion engine (not shown) of the industrial vehicle, for example, in the case of a Diesel engine, to the fuel pump thereof.

The other end of the change-over valve 61 is connected through a duct 70 with a two-position valve 71 to be actuated with the aid of a solenoid. With the valve 71 is furthermore connected the pump 5 for supplying control-fluid through a duct 72.

In the position shown of the valve 71 the duct 72 communicates through the valve 71 with a duct 73. The duct 72 is furthermore connected. as shown in the Figure. with the two control-valves 63 and 65 'for' tne supply of control-fluid to said valve . With the two control-valves 63 and 65 is furthermore connected an outlet duct 74 being in open communication with the sump 4. In the position shown in the Figure the duct 70 connected with the valve 61 is in open communication with said outlet duct 74.

The Figure furthermore shows that the duct 73 communicates with four control-valves 75 to 78, which are also connected with the outlet duct 74. These control-valves are furthermore provided with outlet ducts, whose outlets $X_3$ to $X_6$ are connected through ducts not shown with the ports $X_3$ to $X_6$ of the valves 10 and 11 so that in a manner known per se with the aid of the control-valves 75 to 78 control-fluid supplied by the pump can be fed as desired to one or more of the ports $X_3$ to $X_6$ for setting the valves 10 and/or 11. This is known per se and does not form part of the invention.

When the industrial vehicle is operating, for example, as an excavator for displacing ground or the like. the transmission mechanism arranged between the engine 22 and the driven wheels of the vehicle will be set in the low-speed position. During this operation the valve 71 is in the position shown in the Figure so that the change-over valve 61 is in open communication with the outlet duct 74. By the pressure prevailing in the duct 7 the bias valve 50 is set so that an open communication is established between the outlet duct 12 and the outlet duct 54. The combustion engine is running with a manually set, fixed number of revolutions and the two pumps 1 and 2 will supply a given amount of fluid per unit time. The run of the vehicle is governed by the two control-valves 63 and 65, which are preferably adjustable with the aid of a single, rotatable foot pedal. When the valve 65 is depressed, control-fluid will be fed under pressure through the change-over valve 61 and the duct 60 to the port $x_1$ of the valve 9 so that the valve is set so that through the duct 7 pressurized fluid is admitted to the motor 22. According as the valve 65 is further depressed, the valve 9 will be further actuated so that more fluid is fed to the motor 22 and in this way the speed of the vehicle during its forward run can be controlled with a constant number of revolutions of the combustion engine driving the pumps 1 and 2. If, on the contrary, by turning siad foot pedal the valve 63 is adjusted rather than the valve 65, pressurized control-fluid will be fed through the duct 62 to the port $x_2$ of the valve 9. This results in such a setting of the valve 9 that the pressurized fluid is fed from the duct 7 to the motor 22 to produce a reverse drive. According as the valve 63 is further depressed, the backward run will be speeded up whilst the number of revolutions of the combustion engine driving the pumps 1 and 2 remains the same.

Although reference is made to a control of the control-valves 63 and 65 with the aid of a foot pedal, it will be obvious that a manually operable lever may be used for said purpose.

For road transport or the like the transmission mechanism between the motor 22 and the driven wheels will be set to high speed. This setting results at the same time in energization of the solenoid of the valve 71, which is thus changed over from the position shown in the Figure to the second position. Thus the duct 73 is brought into open communication with the outlet duct 74 so that no pressurized con-

-8-

trol-fluid is any longer fed to the control-valves 75 to 78 and hence unwanted regulations of the various members governed through said control-valves cannot be carried out. In this new position of the valve 71 pressurized control-fluid is passed from the pump 5 to the change-over valve 61, which is thus moved into a position in which the communication between the control-valve 65 and the duct 60 is interrupted. The pressurized fluid thus flows through the duct 60 to the port $x_1$ of the valve 9, which is thus urged into the fully open position for a forward travel. Apart therefrom the pressurized control-fluid flows through the duct 58 to the change-over valve 57 and through said change-over valve and the duct 56 to the bias valve 50.

The energization of the solenoid of the valve 35 has dropped out so that the control-duct 34 of the pressure control-valve 33 is in open communication with the tank 4.

The bias valve 50 is designed so that when no pressurized fluid is fed to the bias valve the pressure drop through the duct 52 in the bias valve 50 between the ducts 12 and 53 is equal to about 30 bars.

At an increase in pressure at the junction of the duct 52 the bias valve 50 is adjusted so that the pressure drop between the ducts 12 and 53 decreases. When the pressure in the duct 52 is about 70 bars, a free flow will again take place between the ducts 12 and 54 through the bias valve 50.

When the above-mentioned high speed setting is chosen and the combustion engine is running idle, a pressure of about 30 bars will prevail upstream of the valve 50 in the system, whilst owing to the setting of the valve 33 the pressure drop across the motor 22 will be about 5 bars. This pressure difference is too low to cause the motor to rotate.

When the vehicle driver wants to drive the vehicle forward, he will turn the foot pedal so that the valve 65 is changed over. According as the control-valve 65 is further adjusted, the pressure in the cylinder 66 will increase and hence the piston 68 with the piston rod 67 will be further displaced against the effort of the spring 69. It will be obvious that with a gradually further adjustment of the valve 65 the number of revolutions of the combustion engine will also be gradually raised, since the piston rod 67 is coupled with the mechanism controlling the fuel supply to the combustion engine.

In the proximity of the foot pedal adjusting the control-valve 65 an electric switch (not shown) is arranged so that this switch will be changed over when the number of revolutions of the combustion engine is about 800 to 900 rev/min. By changing over this switch the solenoid of the two-position valve 35 is energized so that this valve is changed over from the position shown in the Figure to the other position in which the outlet through the duct 34 is blocked. As a result the pressure setting changes to a maximum pressure of 300 bars, whilst the fluid pressure in the system will gradually increase so that also the torque of the motor 22 will increase. Finally the torque produced by the motor 22 will be sufficiently high to move the vehicle. A rise of pressure will start a control of the pumps 1 and 2, the fluid displacement of which being thus reduced.

By actuating the valve 65 with the aid of the foot pedal the number of revolutions of the combustion engine and hence the speed of the vehicle during travel can be controlled, whilst the self-setting hydraulic pump and hydraulic motors will adjust in dependence on the set number of revolutions of the combustion engine and on the torque to be produced by the motor 22.

By using the construction depicted above the relatively high-speed run of the vehicle is comparable with the run of a normal automobile or the like, whilst the speed is exclusively controlled with the aid of the foot pedal actuated by the driver and the number of revolutions of the combustion engine will vary with the desired speed in contrast to the conventional practice in which the combustion engine of excavators or the like continually runs with a high number of revolutions.

When the industrial vehicle has to run down a slope or when the driver reduces the speed of the combustion engine and hence of the pumps 1 and 2, it may occur that the hydraulic motor 22 rotates more rapidly than would correspond to the fluid supplied by the pumps 1 and 2. The hydraulic motor 22 then tends to operate, so to say, as a pump and a pressure drop will occur in the fluid supply duct of the hydraulic motor. Through the duct 52 this pressure drop acts upon the bias valve 50 so that a higher pressure will be produced upstream of the valve 50 in the duct 12 and on the outlet side of the motor 22. As a result a given excess pressure is maintained through the valve 33 in the duct 7 and hence on the inlet side of the motor. Therefore, also under these conditions the supply of pressurized fluid to the pump is ensured so that any leakage of the pump can be compensated for and the occurrence of cavitations in the pump can be avoided.

It should be noted that valves (not shown) corresponding with the valves 75 to 78 will be provided in the ducts 73 and 74 for the control of the second valve block.

An industrial vehicle of the kind described above can be effectively equipped with a seat for the operator of the vehicle as described in the prior Dutch Patent Application 8200614, said seat being provided with a pivotable arm rest. With this reference the teachings of said Application are considered to be included in the present description.

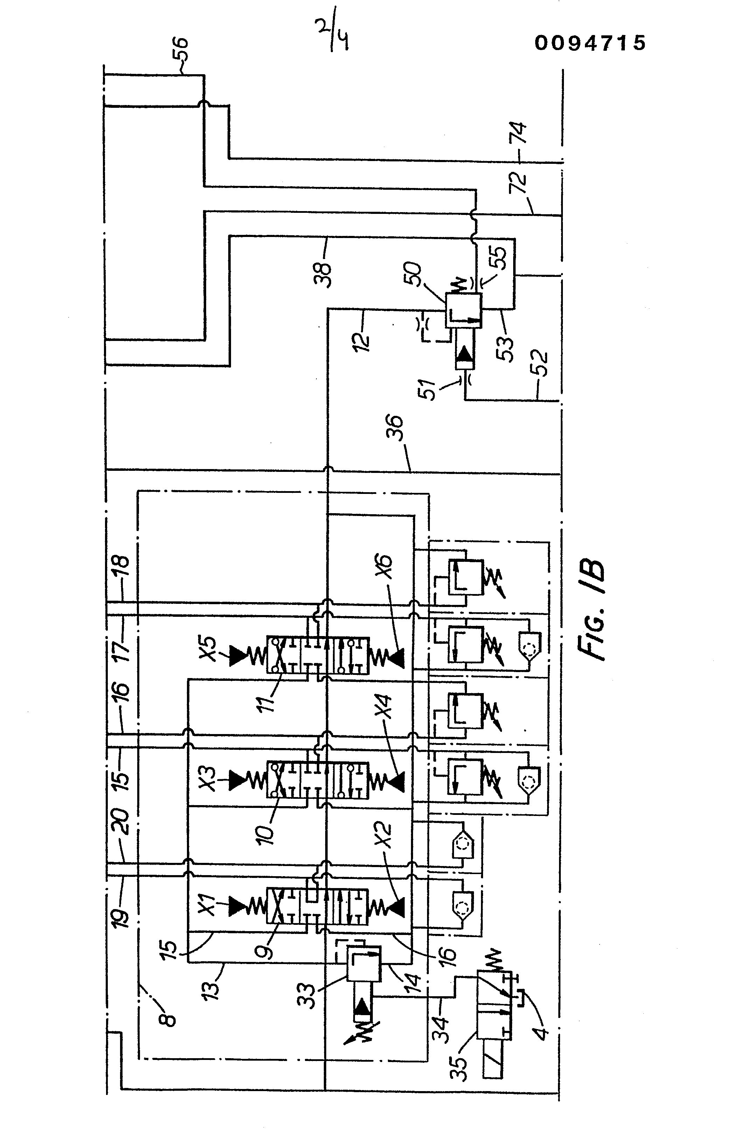

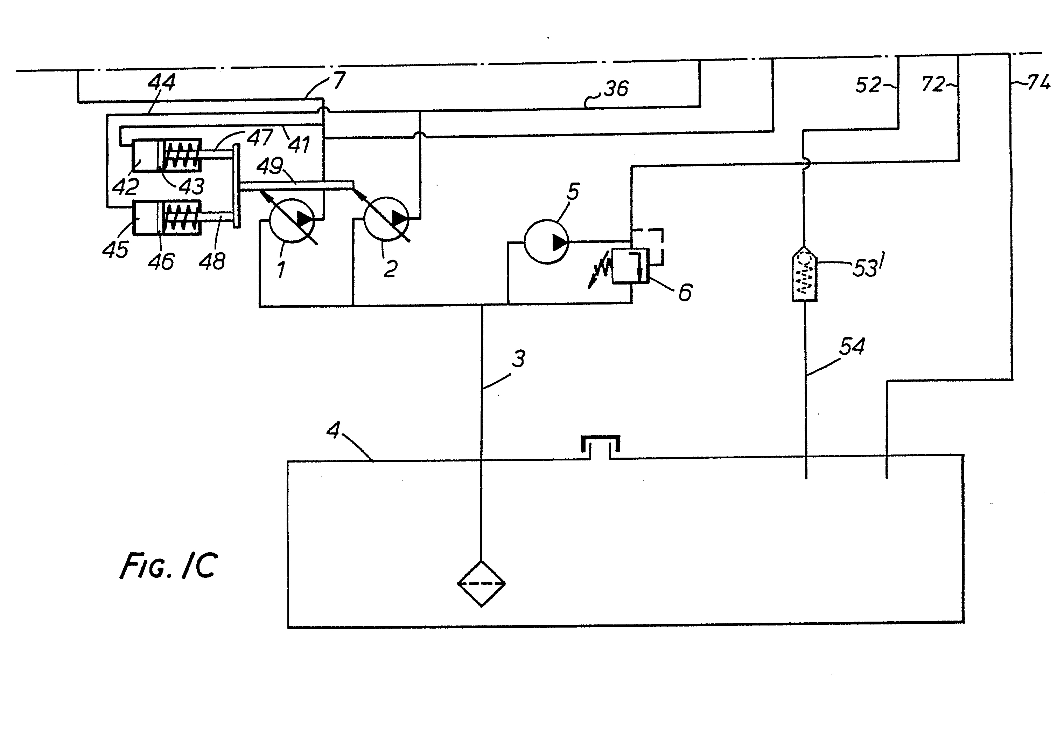

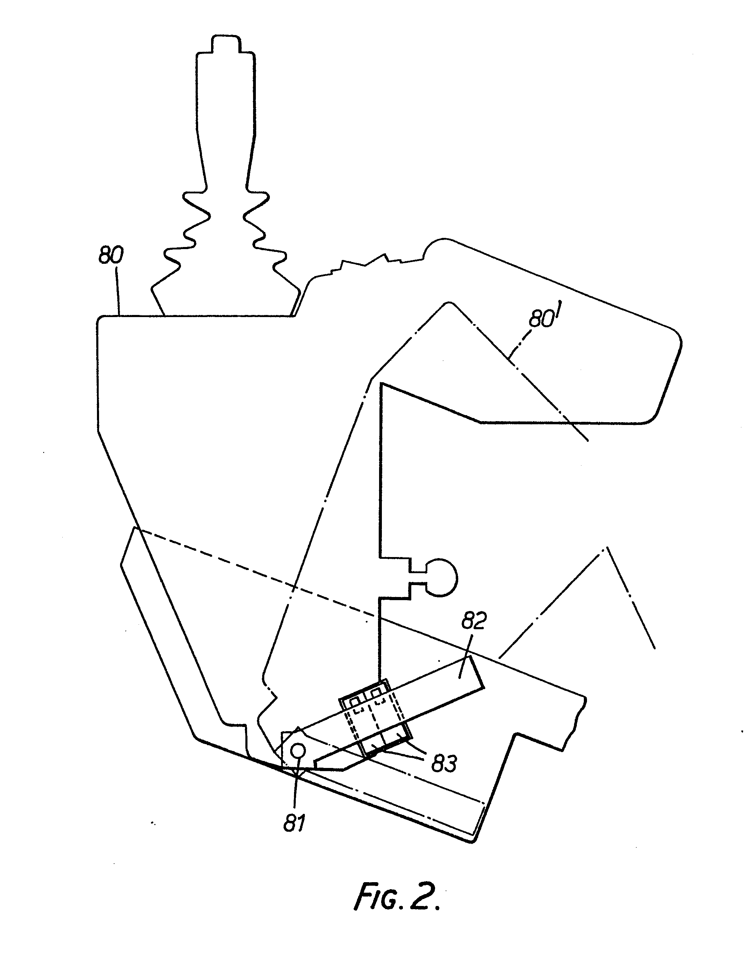

As is schematically shown in Fig. 2 a pivotable arm rest 80 can be turned out of the position shown in solid lines, which the arm rest occupies in normal operation of the industrial vehicle to a position 80' indicated by broken lines about a pivotal shaft 81. In the two positions the arm rest can be locked in place with the aid of locking means (not shown).

With the arm rest 80 is connected an arm 82 which can pivot with the back about the pivotal shaft 81. This pivotable arm 82 cooperates with electric switches 83. The switches 83 are connected with the aid of an electric circuit (not shown) to the solenoid energized valves 35 and 71.

In the working position of the arm rest 80 the switches 83 are set with the aid of the arm 82 in a manner such that they do not hinder the current supply to the solenoid-actuated valves 35 and 71, which can thus operate in the manner described above.

When leaving his seat the operator of the vehicle will turn the arm rest 80 as viewed in Fig. 2 in clockwise direction about the shaft 81 into a position in which the arm does not hinder getting off the seat sideways. The arm 82 is then moved into the position 82' indicated by broken lines. As a result the switches 83 can go over to a position in which the current supply to the solenoid-actuated valves 35 and 71 is interrupted. As stated above, upon interruption of the current supply to the solenoid of the valve 35 the valve 35 will move into a position such that in the duct 7 no significant pressure can build up so that the actuation of members with the aid of pressurized fluid supplied by the pumps 1 and 2 is excluded. Furthermore when the solenoid of the valve 71 is no longer energized, the valve 71 gets into a position such that also the supply of pressurized fluid from the pump 5 through the duct 72 to the control-pumps 75 to 78 is interrupted.

Obviously, when the arm rest is turned out of the working position, it is automatically ensured that actuation of members with the aid of pressurized fluid such as the hydraulic motor of the industrial vehicle and any tools coupled with the vehicle and settable with the aid of setting cylinders or the like is excluded, which represents an important safety factor of the industrial vehicle embodying the invention.

It will be obvious that when the design of the hydraulic system employed requires, more members than the two valves 35 and 71 can be actuated when the arm rest is turned in order to avoid unwanted drive of given members in the manner depicted above.

The figures used in the claims are only meant to explain more clearly the intention of the invention and are not supposed to be any restriction concerning the interpretation of the invention.

-1-

CLAIMS

1.        An industrial vehicle, particularly an excavator or the like, comprising a ground-wheel supported frame, at least one hydraulic pump driven by a combustion engine equipped with a control-mechanism for fuel supply and a hydraulic motor to be driven wi h the aid of the hydraulic pump, said motor being coupled through a transmission mechanism with drivable ground wheels, said transmission mechanism being settable in a first position for a low speed run and in a second position for a high speed run of the vehicle, whilst between the hydraulic pump and the hydraulic motor a three-position valve is arranged for interrupting the fluid supply to the hydraulic motor and for inverting the direction of rotation of the hydraulic motor, the pump and the motor being of the self-setting type so that they set themselves in dependence on the power fed to the hydraulic pump and on the power absorbed at the hydraulic motor characterized in that means are provided with the aid of which at setting to high speed travel the three-position valve arranged between the hydraulic pump and the hydraulic motor is set in the fully open position for a forward drive whilst with the aid of a control-member the supply of pressurized fluid to a setting member regulating the control-mechanism of the fuel supply to the combustion engine can be controlled.

2.          An industrial vehicle as claimed in Claim 1 characterized in that the supply duct (77) between the hydraulic pump (1) and the hydraulic motor (22) includes a valve (33) which cuts off the communication between the supply duct (7) and the outlet duct (12) when the combustion engine attains a given number of revolutions.

3.          An industrial vehicle as claimed in Claim 2 characterized in that when a permissible working pressure is exceeded, the valve (33) permits fluid to pass to the outlet duct (12).

4.          An industrial vehicle as claimed in claim 2 or 3 characterized in that the valve (35) is actuated via an electric switch which is adjusted with the aid of the control-member (65).

5.          An industrial vehicle as claimed in anyone of the preceding Claims characterized in that the control-member (65) is formed by a control-valve with the aid of which during low speed travel the flow of control-fluid to the three-position valve (9) arranged between the hydraulic pump (1) and the hydraulic motor (22) can be controlled, the control-valve (65) and the three-position valve (9) communicating with one another through a change-over valve (61), to which control-fluid is supplied in the high speed position for interrupting the communication between the control-valve (65) and the three-position valve (9).

6.          An industrial vehicle as claimed in Claim 4 characterized in that the supply of control-fluid to the change-over valve (61) is carried out with the aid of a two-position valve (71), which does not pass fluid in a first position to the change-over valve (61), but passes fluid to control-valves (75 to 78) for actuating tools arranged on the industrial vehicle or the like and which passes fluid in a second position to the change-over valve (61) and blocks the fluid supply to the control-valves (65 to 68).

7.          An industrial vehicle as claimed in anyone of the preceding Claims characterized in that the outlet duct (12) includes a bias valve (50), which is loaded on the one hand by the pressure of the control-fluid and on the other hand by the pressure prevailing in the inlet duct (7) between the hydraulic pump (1) and the hydraulic motor (22) in a manner such that with an increasing pressure in the supply duct (7) the pressure drop across the bias valve (50) decreases.

8.          An industrial verhcle, particularly an excavator or the like comprising at least one hydraulic pump, at least one member to be driven with the aid of pressurized fluid supply by the pump and a seat for the operator of the vehicle characterized in that the seat is provided with an arm rest which is pivotable between a working position and a position in which the arm rest does not hinder sitting down on or getting off the seat, whilst in the range of the pivotal movement of the arm rest or of a part connected with the arm rest a control-member is arranged with the aid of which the supply of fluid from the motor to the member to be driven at a pressure such that the member to be driven can be actuated can be cut off when the arm rest is turned out of the working position.

9.          An industrial vehicle as claimed in Claim 8 characterized in that the control-member is formed by an electric switch which acts upon a valve to be actuated with the aid of a solenoid.

10.         An industrial vehicle as claimed in Claim 9 characterized in that said valve establishes a communication between an outlet duct of the hydraulic pump and a return duct connected with a fluid tank so that the pressure in the  outlet duct of the motor cannnot exceed a given value.

*Fig. IA*

0094715

FIG. IB

FIG. IC

0094715

*Fig. 2.*